# EUROPÄISCHE PATENTANMELDUNG

(11) **EP 4 194 280 A1**
(43) Veröffentlichungstag der Anmeldung: **14.06.2023**
(21) Anmeldenummer: 22212806.8
(22) Anmeldetag: 12.12.2022
(51) Int. Cl.: B60R 15/02, B60P 3/32, A47K 3/30, E06B 9/11, A47K 3/36

(54) **FREIZEITFAHRZEUG MIT EINEM RAUMTRENNER FÜR EINE SANITÄRZELLE**

(30) Priorität: 11.12.2021 DE 102021132767
(71) Anmelder: Hymer GmbH & Co. KG, 88339 Bad Waldsee (DE)
(72) Erfinder: Steigmiller, Anton, 88444 Ummendorf (DE); Schroll, Michael, 88353 Kißlegg (DE); Wiest, Hansi, 88339 Bad Waldsee (DE)
(74) Vertreter: Waller, Stefan

(57) **Zusammenfassung**

Raumtrenner (1) für eine Sanitärzelle (2) eines Freizeitfahrzeugs (3), insbesondere eines Wohnmobils oder Wohnwagens, mit einem Rollladen (4), der vertikal orientierte - Rollladenlamellen (5) aufweist. Vorgeschlagen wird, dass der Rollladen (4) an seinem unteren Ende (6) einen Führungsabschnitt (7) aufweist und dass zumindest ein Teil der Rollladenlamellen (5) an seinem Führungsabschnitt (7) federnde Lamellenelemente (8) aufweist, an denen der Rollladen (4) im Führungsabschnitt (7) geführt ist. Ferner ist ein Freizeitfahrzeug mit solch einem Raumtrenner (1) angegeben.

## Beschreibung

Die Erfindung betrifft ein Freizeitfahrzeug mit einem Raumtrenner für eine Sanitärzelle, wobei ein Rollladen mit vertikal orientierten Rollladenelementen vorgesehen ist.

Aus der DE 295 03 469 U1 ist eine kompakte Nasszelle für ein Wohnmobil bekannt. Bei der bekannten Nasszelle ist ein bestimmter Bereich der Nasszelle ausschließlich zum Duschen vorgesehen. Bei einer bekannten Ausgestaltung kann der Boden des Duschbereichs auf der gleichen Höhe wie der Waschraumboden liegen, wobei der Boden des Duschbereichs durch eine Wasserauffangrinne vom Boden des Waschbereichs getrennt ist. Hierbei kann eine vergleichsweise kleine Stufe zwischen dem Duschboden und dem Waschraumboden vorgesehen sein. Die Abtrennung der Dusche erfolgt über eine Trennwand aus mehreren klappbaren Elementen, die scharnierartig miteinander verbunden sind.

Die aus der DE 295 03 469 U1 bekannte Nasszelle hat den Nachteil, dass die Wasserauffangrinne in der Nasszelle eine unerwünschte Vertiefung darstellt.

Aus der DE 296 05 479 U1 ist eine sanitäre Nasszelle für Wohnmobile bekannt. Hierbei ist die Tür für den Abschluss der Nasszelle als halbzylindrische Schale ausgeformt, die an den oberen und unteren Begrenzungsflächen im Kreismittelpunkt drehbar gelagert ist.

Bei der Ausgestaltung einer Dusche beziehungsweise Sanitärzelle für Freizeitfahrzeuge ist es denkbar, dass ein Raum-Rollladen den Raumabschluss bildet. Hierbei kann eine Duschwanne vorgesehen sein, die als Tiefziehteil ausgebildet ist. Wenn ein Rollladen in der Duschwanne geführt werden soll, dann ist hierfür eine breite Rinne für die Führung des Rollladens erforderlich. Ein solch breite Rille ist allerdings beim Darauftreten unangenehm. Dadurch ist es nicht wünschenswert, solch eine Führung im direkt begehbaren Bereich vorzusehen. Außerdem hat solch eine Konstruktion den Nachteil, dass keine bodenbündige Dusche realisiert wird.

Der vorliegenden Erfindung liegt die Aufgabe zugrunde, einen Raumtrenner für eine Sanitärzelle eines Freizeitfahrzeugs und ein Freizeitfahrzeug mit solch einem Raumtrenner anzugeben, die in verbesserter Weise ausgestaltet sind.

Diese Aufgabe wird durch einen Raumtrenner mit den Merkmalen des unabhängigen Patentanspruchs 1 und durch ein Freizeitfahrzeug mit den Merkmalen des Patentanspruchs 10 gelöst. Vorteilhafte Weiterbildungen der Erfindung sind in den Unteransprüchen angegeben.

Die Aufgabe wird durch einen Raumtrenner für eine Sanitärzelle eines Freizeitfahrzeugs, insbesondere eines Wohnmobils oder Wohnwagens, mit einem Rollladen, der vertikal orientierte Rollladenlamellen aufweist, gelöst, wobei der Rollladen an seinem unteren Ende einen Führungsabschnitt aufweist und wobei zumindest ein Teil der Rollladenlamellen in dem Führungabschnitt federnde Lamellenelemente aufweist, an denen der Rollladen am Führungsabschnitt geführt ist.

Die Aufgabe wird außerdem durch ein Freizeitfahrzeug, insbesondere ein Wohnmobil oder einen Wohnwagen, mit zumindest einem solchen Raumtrenner gelöst.

Vorteilhaft ist es, dass ein Gleitprofil vorgesehen ist und dass der Rollladen über die in dem Gleitprofil geführten federnden Lamellenelemente geführt ist. Dies schließt nicht aus, dass noch auf andere Weise eine Führung realisiert ist, beispielsweise in einem Führungsspalt.

Vorteilhaft ist es, dass das Gleitprofil einen Vorsprung aufweist und dass die federnden Lamellenelemente den Vorsprung des Gleitprofils hintergreifen. Der Vorsprung kann hierbei auch zur Minimierung von Schwallwasser dienen beziehungsweise Schwallwasser zurückhalten.

Vorteilhaft ist es auch, dass ein Boden vorgesehen ist, der eine Vertiefung aufweist, wobei an dem Boden eine durch die Vertiefung gebildete Kante ausgestaltet ist und wobei das Gleitprofil zumindest teilweise in eine an der Kante ausgestaltete Ausnehmung des Bodens eingesetzt ist. Dadurch ist eine robuste Ausgestaltung möglich. Ferner kann hierdurch auf vorteilhafte Weise ein Abschluss für das Duschwasser realisiert werden.

Vorteilhaft ist es auch, dass das Gleitprofil eine Kanteneinfassung aufweist, die die Kante des Bodens aus der Aufhängung des Bodens heraus umgreift. Hierdurch ist eine besonders robuste Ausgestaltung realisierbar, wobei Beschädigungen des Bodens an der Kante zuverlässig verhindert sind. Das Gleitprofil kann insbesondere aus Aluminium ausgestaltet sein.

Vorteilhaft ist es ferner, dass eine bewegbare Bodenplatte vorgesehen ist, die zumindest teilweise in der Vertiefung angeordnet ist, dass zwischen einer Kante der bewegbaren Bodenplatte und der Kante des Bodens ein Führungsspalt ausgestaltet ist, in dem der Rollladen an seinem unteren Ende angeordnet ist, und dass in einer Duschposition der bewegbaren Bodenplatte der Führungsspalt vergrößert ist. Durch die Vergrößerung des Führungsspalts kann insbesondere ein besserer Abfluss des Duschwassers erzielt werden.

Vorteilhaft ist es, dass an einer nach oben orientierten Seite des Gleitprofils, eine Gleitfläche ausgebildet ist und dass die Rolladenlamellen an der Gleitfläche des Gleitprofils aufstehend in dem Gleitprofil geführt sind. Hierdurch ist zum einen eine vorteilhafte Führung des Rollladens gewährleistet. Zum anderen wird ein Austritt von Schwallwasser aus dem Duschbereich in vorteilhafter Weise verhindert.

Vorteilhaft ist es auch, dass der Rollladen an seinem Führungsabschnitt mit einer reduzierten Dicke der Rollladenlamellen ausgestaltet ist. An dem Führungsabschnitt kann der Rollladen dann in vorteilhafter Weise in dem Führungsspalt geführt werden. Hierbei kann der Führungsspalt entsprechend klein ausgestaltet werden, so dass ein Treten auf dem Spalt nicht unangenehm ist.

Vorteilhaft ist es, dass die Rollladenlamellen mit den federnden Lamellenelementen an dem unteren Ende des Rollladens zumindest näherungsweise U-förmig gebogen ausgestaltet sind. Hierdurch wird sowohl eine vorteilhafte Führung als auch eine vorteilhafte Abstützung des Rollladens ermöglicht.

Weitere Vorteile und Einzelheiten der Erfindung werden anhand der in den schematischen Figuren dargestellten Ausführungsbeispiele näher erläutert. Hierbei zeigen:
- Fig. 1: einen Raumtrenner für eine Sanitärzelle eines Freizeitfahrzeugs in einer auszugsweisen, schematischen Schnittdarstellung entsprechend einem Ausführungsbeispiel der Erfindung.
- Fig. 2: ein Gleitprofil für den in Figur 1 dargestellten Raumtrenner.

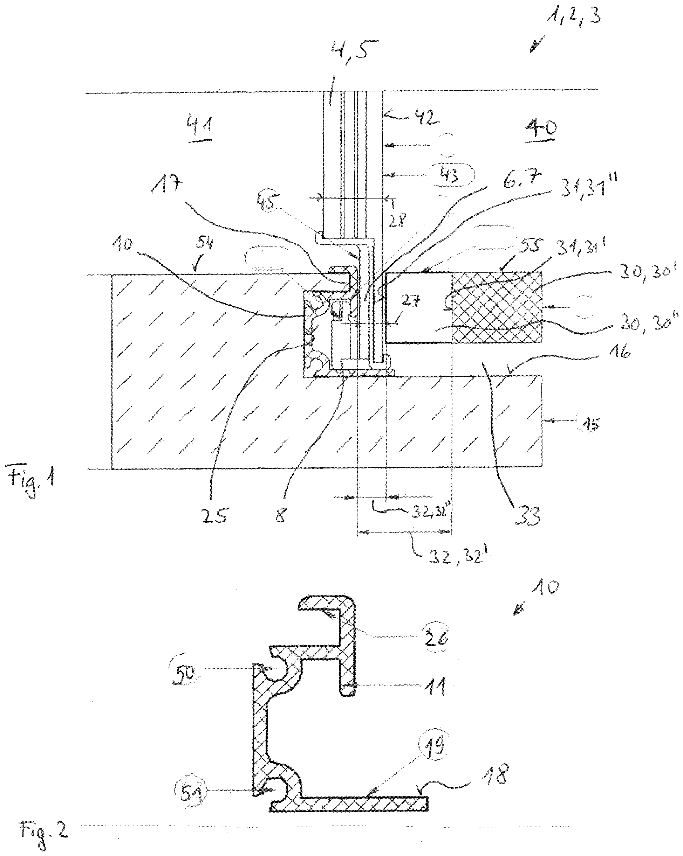

Fig. 1 zeigt einen Raumtrenner 1 für eine Sanitärzelle 2 eines Freizeitfahrzeugs 3. Das Freizeitfahrzeug 3 kann insbesondere als Wohnmobil oder Wohnwagen ausgebildet sein. Der Raumtrenner 1 eignet sich besonders für solche Freizeitfahrzeuge 3.

Der Raumtrenner 1 weist einen Rollladen 4 mit vertikal orientierten Rollladenlamellen 5 auf. An seinem unteren Ende 6 ist der Rollladen 4 mit einem Führungsabschnitt 7 ausgestaltet. Zumindest ein Teil der Rollladenlamellen 5 weist in dem Führungsabschnitt 7 federnde Lamellenelemente 8 auf. Vorzugsweise sind an allen Rollladenlamellen 5 solche federnden Lamellenelemente 8 vorgesehen. Der Rollladen 4 ist an den federnden Lamellenelementen 8 im Führungsabschnitt 7 geführt. Die Führung wird hierbei über ein Gleitprofil 10 vermittelt. Die federnden Lamellenelemente 8 treffen hierbei mit dem Gleitprofil 10 zusammen, so dass der Rollladen 4 über die in dem Gleitprofil 4 geführten federnden Lamellenelementen 8 geführt ist.

Die Ausgestaltung des Raumtrenners 1, insbesondere des Gleitprofils 10, und die Funktionsweise sind im Folgenden auch unter Bezugnahme auf die Fig. 2 näher beschrieben.

Fig. 2 zeigt das Gleitprofil 10 des in Fig. 1 dargestellten Raumtrenners 1. Das Gleitprofil 10 weist einen Vorsprung auf, das Schwallwasser zurückhält. Die federnden Lamellenelemente 8 hintergreifen außerdem den Vorsprung 11 des Gleitprofils.

Außerdem kann ein Boden 15 beispielsweise als Laufboden eines Freizeitfahrzeugs ausgestaltet sein. Bei dem Boden 15 kann es sich allerdings auch um einen Boden der Sanitärzelle 2 oder einen sonstigen Boden des Freizeitfahrzeugs 3 handeln. Durch die Vertiefung 16 ist eine Kante 17 an dem Boden 15 ausgestaltet. An der Kante 17 ist das Gleitprofil 10 teilweise in eine Ausnehmung 25 des Bodens 15 eingesetzt. Hierdurch ist eine zuverlässige Befestigung des Gleitprofils 10 an dem Boden 15 realisiert.

Das Gleitprofil 10 weist eine nach oben orientierte Seite 18 auf, die den federnden Lamellenelementen 8 zugewandt ist. An der Seite 18 ist eine Gleitfläche 19 des Gleitprofils 10 ausgeführt. Die Rollladenlamellen 5 stehen an der Gleitfläche 19 des Gleitprofils 10 auf. Vorzugsweise kommt es hierbei zu einem Kontakt zwischen den federnden Lamellenelementen 8 und dem Gleitprofil 10. Dadurch ist auch eine Abdichtung verbessert.

Das Gleitprofil 10 kann aus einem metallischen Werkstoff, insbesondere Aluminium, hergestellt sein. Das Gleitprofil 10 umgreift aus der Ausnehmung 25 des Bodens 15 heraus die Kante 17. Hierdurch ist eine Kanteneinfassung 26 realisiert.

Der Rollladen 4 ist an seinem Führungsabschnitt 7 mit einer Dicke 27 ausgestaltet, die gegenüber einer Dicke 28 oberhalb des unteren Endes 6 reduziert ist. Ferner ist eine bewegbare Bodenplatte 30 vorgesehen, die in der Vertiefung 16 angeordnet ist. Zwischen einer Kante 31 der bewegbaren Bodenplatte 30 und der Kante 17 des Bodens 15 ist ein Führungsspalt 32 ausgestaltet. In dem Führungsspalt 32 ist der Rollladen 4 mit seinem Führungsabschnitt 7 angeordnet und gegebenenfalls zusätzlich geführt. Die Bodenplatte 30 kann aus einer Duschposition 30' in eine Ausgangsposition 31" verstellt werden, wobei die Kante 31 aus der Duschvorrichtung 31' in die Ausgangsposition 31" gelangt. In der Ausgangsposition ist der Führungsspalt 32 dann schmal ausgestaltet, wie es durch das Bezugszeichen 32" veranschaulicht ist. In der Duschposition 30' der Bodenplatte 30 ist der Führungsspalt 32 hingegen erweitert, wie es durch das Bezugszeichen 32' veranschaulicht ist. Somit kann in der Duschposition 30' der Bodenplatte 30 Duschwasser über einen Abfluss 33 abfließen. In der Ausgangsposition 30' der Bodenplatte 30 ergibt sich hingegen ein schmaler Führungsspalt 32, der insbesondere kleiner als etwa 8 mm sein kann.

In diesem Ausführungsbeispiel sind die Rollladenlamellen 5 mit den federnden Lamellenelementen 8 an dem unteren Ende 6 des Rollladens 4 U-förmig gebogen ausgestaltet. Hierdurch liegt der Vorsprung 11 gewissermaßen zwischen den federnden Lamellenelementen 8 und den Rollladenlamellen 5 im Führungsabschnitt 7.

Somit kann in dem Boden 15 des Freizeitfahrzeugs 3 in vorteilhafter Weise die Vertiefung 16 zur Aufnahme und zur zielgerichteten Ableitung von Duschwasser realisiert werden. Der Raum für eine Dusche 40 kann hierdurch durch den Rollladen 4 zuverlässig vom restlichen Raum 41, insbesondere einem Wohnraum 41, abgetrennt werden. Hierbei kann der Rollladen 4 auf einer der Dusche 40 zugewandten Seite 42 eine durchgehende Folienbeschichtung 43 aufweisen.

Das untere Ende 6 des Rollladens 4, das mit einer reduzierten Dicke 28 ausgestaltet ist und somit abgesetzt ist, kann außerdem mit einem Kunststoffstopfen 45 geschlossen sein. Der Kunststoffstopfen 45 kann als Profilabschluss für die Rollladenlamellen 5 dienen. Ferner kann der Kunststoffstopfen 45 den Rollladen 4 im Gleitprofil 10 führen. Die federnden Lamellenelemente 8 können eine geräuschreduzierte Führung des Rollladens 4 im Gleitprofil 10 gewährleisten. Der Kunststoffstopfen 45 ist vorzugsweise aus einem Kunststoff ausgebildet, so dass sich gute Gleiteigenschaften in Bezug auf ein vorzugsweise metallisches Gleitprofil 10 ergeben.

Das Gleitprofil 10 kann in vorteilhafter Weise durch die Gleitfläche 19 eine Gleitebene 19 für den Rollladen 4 bilden.

Außerdem kann das Gleitprofil 10 ein oder mehrere Kanäle 50, 51 aufweisen. Die Kanäle 50, 51 können hierbei zur Aufnahme von Kurvenelementen dienen. Ferner können die Kanäle 50, 51 zum Verschrauben dienen.

Durch den Vorsprung 11 kann eine Kante zur Minimierung von Schwallwasser realisiert sein. Da auch die Kanteneinfassung 26 durch das Gleitprofil 10 realisiert werden kann, ergibt sich eine hohe Funktionalität und somit eine Reduzierung von benötigten Bauteilen.

In diesem Ausführungsbeispiel ist die Bodenplatte 30 als bewegbare Bodenplatte 30 ausgeführt. Bei einer abgewandelten Ausgestaltung kann noch eine feststehende Bodenplatte 30 realisiert werden. Sowohl die bewegbare Bodenplatte 30 als auch eine feststehende Bodenplatte können herausnehmbar sein. Die Bodenplatte 30 kann auch eine Rinne aufweisen. Dies ist für einen fest verbauten Duschboden von Vorteil.

Somit kann eine Ausgestaltung des Raumtrenners 1 realisiert werden, bei der keine statisch relevante Aufhängung des Rollladens 4 an einem Dach des Freizeitfahrzeugs 3 oder an einem anderen Element erforderlich ist. Ferner können gute Laufeigenschaften des Rollladens 4 durch eine optimierte Materialabstimmung des als Laufschiene dienenden Gleitprofils 10 und der als Gleiter dienenden federnden Lamellenelemente 8 realisiert werden.

Ferner kann das gleiche Bodenniveau innerhalb und außerhalb der Dusche realisiert werden, indem der Boden 15 und die Bodenplatte 30 mit ihren Oberseiten 54, 55 auf zumindest näherungsweise der gleichen Höhe angeordnet werden. Dadurch werden Stolperfallen für den Benutzer von vornherein vermieden. Außerdem kann insbesondere durch die verstellbare Bodenplatte 30 im Ruhezustand (Ausgangsposition) 30' eine sehr schmale Rille im Boden realisiert werden, so dass sich ein angenehmes Laufgefühl für die Benutzer ergibt.

Somit kann ein Raumtrenner 1 mit einer Bodenführung realisiert werden, bei der ein unten aufstehend geführter Raum-Rollladen 4 in einer Sanitärzelle 2 eines Freizeitfahrzeugs 3 realisiert ist.

Die Erfindung ist nicht auf die auf das beschriebenen Ausführungsformen beschränkt.

## Patentansprüche

1. Raumtrenner (1) für eine Sanitärzelle (2) eines Freizeitfahrzeugs (3), insbesondere eines Wohnmobils oder Wohnwagens, mit einem Rollladen (4), der vertikal orientierte Rollladenlamellen (5) aufweist,
**dadurch gekennzeichnet,**
**dass** der Rollladen (4) an seinem unteren Ende (6) einen Führungsabschnitt (7) aufweist und dass zumindest ein Teil der Rollladenlamellen (5) in dem Führungsabschnitt (7) federnde Lamellenelemente (8) aufweist, an denen der Rollladen (4) im Führungsabschnitt (7) geführt ist.

2. Raumtrenner nach Anspruch 1,
**dadurch gekennzeichnet,**
**dass** ein Gleitprofil (10) vorgesehen ist, und dass der Rollladen (4) über die in dem Gleitprofil (10) geführten federnden Lamellenelementen (8) geführt ist.

3. Raumtrenner nach Anspruch 2,
**dadurch gekennzeichnet,**
**dass** das Gleitprofil (10) einen Vorsprung (11) aufweist und dass die federnden Lamellenelemente (8) den Vorsprung (11) des Gleitprofils (10) hintergreifen.

4. Raumtrenner nach Anspruch 2 oder 3,
**dadurch gekennzeichnet,**
**dass** ein Boden (15) vorgesehen ist, der eine Vertiefung (16) aufweist, dass in dem Boden (15) eine durch die Vertiefung (16) gebildete Kante (17) ausgestaltet ist und dass das Gleitprofil (10) zumindest teilweise in eine an der Kante (17) ausgestaltete Ausnehmung (25) des Bodens (15) eingesetzt ist.

5. Raumtrenner nach Anspruch 4,
**dadurch gekennzeichnet,**
**dass** das Gleitprofil (10) eine Kanteneinfassung (26) aufweist, die die Kante (17) des Bodens (15) aus der Ausnehmung (25) des Bodens (15) heraus umgreift.

6. Raumtrenner nach Anspruch 4 oder 5,
**dadurch gekennzeichnet,**
**dass** eine bewegbare Bodenplatte (30) vorgesehen ist, die zumindest teilweise in der Vertiefung (16) angeordnet ist, dass zwischen einer Kante (31) der bewegbaren Bodenplatte (30) und der Kante (17) des Bodens (15) ein Führungsspalt (32) ausgestaltet ist, in dem der Rollladen (4) an seinem unteren Ende (6) angeordnet ist, und dass in einer Duschposition (30') der bewegbaren Bodenplatte (30) der Führungsspalt (32) vergrößert ist.

7. Raumtrenner nach einem der Ansprüche 2 bis 6,
**dadurch gekennzeichnet,**
**dass** an einer nach oben orientierten Seite (18) des Gleitprofils (10) eine Gleitfläche (19) ausgebildet ist und dass die Rollladenlamellen (5) an der Gleitfläche (19) des Gleitprofils (10) aufstehend in dem Gleitprofil (10) geführt sind.

8. Raumtrenner nach einem der Ansprüche 1 bis 7,
**dadurch gekennzeichnet,**
**dass** der Rollladen (4) an seinem Führungsabschnitt (7) mit einer reduzierten Dicke (27) der Rollladenlamellen (5) ausgestaltet ist.

9. Raumtrenner nach einem der Ansprüche 1 bis 8,
**dadurch gekennzeichnet,**
**dass** die Rollladenlamellen (5) mit den federnden Lamellenelementen (8) an dem unteren Ende (6) des Rollladens (4) zumindest näherungsweise U-förmig gebogen ausgestaltet sind.

10. Freizeitfahrzeug (3), insbesondere Wohnmobil oder Wohnwagen, mit zumindest einem Raumtrenner (1) nach einem der Ansprüche 1 bis 9.
